# EUROPEAN PATENT SPECIFICATION

(11) **EP 4 197 815 B1**
(45) Date of publication and mention of the grant of the patent: **19.02.2025**
(21) Application number: 22212326.7
(22) Date of filing: 08.12.2022
(51) Int. Cl.: B60C 9/22, B60C 9/20, B60C 9/28

(54) **TRUCK TIRE**
LASTWAGENREIFEN
PNEU DE CAMION

(30) Priority: 16.12.2021 US 202163265526 P; 11.10.2022 US 202218045492
(43) Date of publication of application: 21.06.2023
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); COCCON, Marco Nicolo, L-2230 Luxembourg (LU)
(74) Representative: Kutsch, Bernd

(56) References cited:
- EP-A1- 3 838 619
- EP-A1- 3 838 623
- EP-A1- 3 862 195
- EP-A1- 4 144 539
- WO-A1-2017/208214
- DE-A1- 102010 016 550

## Description

### Field of Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

EP 3 838 619 A1 describes a tire in accordance with the preamble of claim 1.

Similar tire constructions are also known from WO 2017/208214 A1 and DE 10 2010 016550 A1.

EP 4 144 539 A1, which has been published only after the priority date of this application, describes a tire having a relatively low angle belt positioned between working belts. The further has relatively low angle belts has a first and second narrow belt positioned at each lateral end of the relatively low angle belt. The tire further comprises a rubber spacer located axially between the first and second narrow belts.

EP 3 838 623 A1 describes a tire having a relatively low angle belt positioned between working belts and a transition belt as a radially innermost belt.

EP 3 862 195 A1 describes a tire having two narrow axially spaced relatively low angle belts positioned between working belts. In the space between the two spaced relatively low angle belts, a rubber layer is provided.

### Summary of the Invention

The invention relates to a tire in accordance with claim 1.

Dependent claims refer to preferred embodiments of the invention.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" means at least two annular layers or plies of parallel cords, woven or unwoven, underlying the tread, unanchored to the bead.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions perpendicular to the axial direction.

"Cord" means one of the reinforcement strands, including fibers, which are used to reinforce the plies.

"Extensible" means a cable, cord, wire or reinforcement having an elongation at 10% of the breaking load greater than 0.2%, when measured from a cord extracted from a cured tire.

"Ply" means a cord-reinforced layer of elastomer-coated, radially deployed or otherwise parallel cords.

"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of a first embodiment of a one half of a tire crown area of the present invention illustrating the belt package; and
FIG. 2 is a schematic of a belt layup trajectory for the zero degree full and folded belt edges.

### Detailed Description of Preferred Embodiment of the Invention

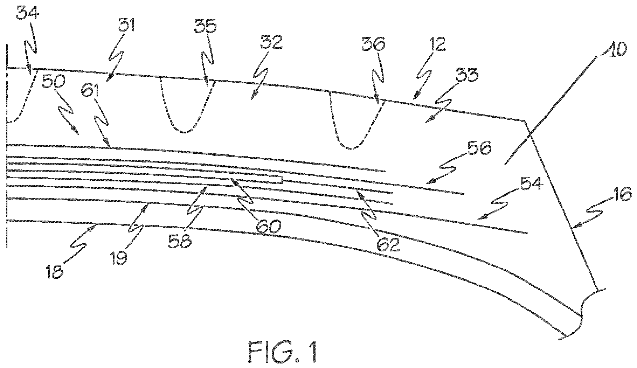

FIG. 1 illustrates a first embodiment of a pneumatic tire, suitable for use as a truck tire. The tire 10 has a tread 12 with a non-skid depth D. The tire tread 12 comprises a plurality of circumferentially continuous ribs, which may vary, but are shown for example as ribs 31, 32 and 33. Positioned between each rib is a circumferential groove 34, 35, 36, which are preferably continuous. The tread may also comprise optional sipes (not shown). The tread pattern is not limited to same, and may comprise, for example, a plurality of blocks and grooves (not shown).

The tire 10 further comprises a casing which includes two opposed sidewalls 16 which extend down from the tread 12 to the bead area (not shown). The casing of the tire may include an inner liner 18 which is typically formed of halobutyl rubber which forms an air impervious barrier. The tire casing may further include one or more radial plies 19 extending from the tread, down the sidewall to the tire bead and wrapped about or otherwise secured to each annular bead.

The tire 10 further includes a belt package 50 which is located between the tread and the one or more casing plies 19. The belt package comprises layers of reinforcement. The casing ply 19 and the belt reinforcing structure 50 are made from cord reinforced elastomeric material, wherein the cords are preferably steel wire or polyamide filaments and the elastomer is preferably rubber.

The belt reinforcing structure 50 includes a first working belt 54 that is the radially innermost belt of the belt package 50. The first working belt 54 is located radially inwards of the second working belt 56 and is preferably the widest belt layer of the belt reinforcing structure 50. The first working belt 54 has a width which is preferably equal or, about equal, i.e., ± 5%, to the tread arc width. The breaker angle of belt 54 is between 10 and 50 degrees, preferably with a right orientation, more preferably in the range of 19 to 25 degrees. Belt 54 is preferably made of extensible wire, which has a % elongation at 10% of breaking load of greater than 0.2%. The wire may be a hybrid cord or a steel wire.

The second working belt 56 is the second member of the working belt pair. The second working belt 56 has a width less than the width of the first working belt 54 and is preferably radially outward of the first working belt 54. Preferably, the second working belt 56 has a width less than the width of belt 54 by a step off, which may range from 10 to 20 mm. Belt 56 has a breaker angle between 12 and 35 degrees, preferably with a left orientation, more preferably in the range of 19 to 25 degrees. Belt 56 is preferably made of extensible wire and is the same as the wire of the first working belt 54. More preferably, the wire has the same construction with the same but opposite angular orientation as the wire of belt 54.

The belt structure 50 further comprises a relatively low angle belt 58 which is preferably located between the working pair belts, 54, 56. The relatively low angle belt 58 has reinforcement cords that are oriented circumferentially at 5 degrees or less, preferably 2 degrees or less, more preferably 0 degrees with the tire midcircumferential plane. The relatively low angle belt 58 has an axial belt width less than the belt width of the working belts 54, 56.

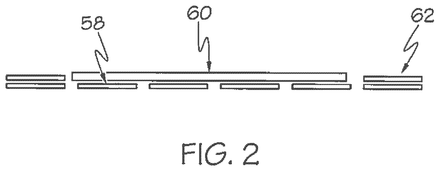

The relatively low angle belt 58 is preferably formed from spirally winding a rubberized strip of one or more cords in a pattern as shown in FIG. 2. Preferably, the strip has 3, 4 or 5 steel cords, and has a width in the range of from 5-10 mm, more preferably 4-6 mm. As shown in FIG. 2, a rubberized strip of reinforcement cords is spirally wound from one end of the belt 58 to the other end of the belt. Next, a first and second narrow belt 62 is applied on each outer lateral end of the relatively low angle belt 58. Each narrow belt 62 has a narrow axial width and they are each positioned radially inward of the axially outermost shoulder groove 36. The narrow belt 62 is preferably the narrowest belt and has an axial width in the range of two to four times the axial width of the groove. Preferably, the narrow belt 62 has the same angle and orientation as the relatively low angle belt 58. As best shown in FIG. 1, a rubber spacer 60 is located between the split belts 62 and functions to fill the void between the split belts 62.

The relatively low angle belt 58 has a width sized to avoid compression in the shoulder area. The belt width of the relatively low angle belt 58 is preferably in the range of 70% to 80% of the tread arc width, and even more preferably in the range of 73-77%. The relatively low angle belt 58 is preferably wide enough to decrease the strain cycles in the breaker wedge and is just stopped before the shoulder area to avoid zero degree wire compression and a too round footprint.

The belt structure of the relatively low angle belt 58 is preferably be formed of a relatively high tensile steel and preferably has a % elongation at 10% of breaking load of 0.18 or more, such as 0.20 or more, for measurements taken from a cured tire. For measurements taken from bare cords, the % elongation at 10% of breaking load is 0.2 or more. Alternatively, the relatively low angle belt 58 may be formed of non-metal reinforcements such as aramid, carbon fiber, or polyketone or POK.

The belt structure 50 may further comprise an optional top belt 61. The top belt preferably has an axial width less than the working belts 54, 56.

The aspect ratio of the tire described above may vary. The aspect ratio is preferably in the range of from 0.4 to 0.6. The tire may have a net to gross ratio in the range of 70 to 90, more preferably in the range of 74 to 86, more preferably a 78 to 84.

## Claims

1. A pneumatic tire for use on trucks, the tire (10) comprising a tread (12) and a belt structure (50) located radially inward of the tread (12), the belt structure (50) including a pair of working belts (54, 56), wherein the working belts (54, 56) are reinforced plies each comprising parallel reinforcement elements, wherein the angle of the reinforcement elements in the respective working belt (54, 56) is in a range of from 12 degrees to 35 degrees with respect to the circumferential direction, wherein the belt structure (50) further includes a relatively low angle belt (58) positioned between the working belts (54, 56) and comprising parallel reinforcement elements angled at less than 5 degrees with respect to circumferential direction, wherein the relatively low angle belt (58) has a first and second narrow belt (62) positioned at each lateral end (59) of the relatively low angle belt (58), and wherein the first and second narrow belt (62) are each positioned radially inward of an axially outermost groove (36) on each side of the tread (12), **characterized in that** the tire further comprises a rubber spacer (60) located axially between the first and second narrow belts (62), the axial width of the rubber spacer (60) being in a range of from 35 to 70 percent of the tread arc width.

2. The tire of claim 1 wherein the first and second narrow belt (62) have parallel reinforcement elements angled at less than 10 degrees with respect to the circumferential direction.

3. The tire of at least one of the previous claims further comprising a rubber spacer (60) that is at least partially located radially between the relatively low angle belt (58) and the first working belt (56).

4. The tire of at least one of the previous claims wherein the reinforcement elements in at least one of the working belts (54, 56), the relatively low angle belt (58) or in the first and/or second narrow belt (62) are extensible having an elongation at 10% of the breaking load greater than 0.2% or greater than 0.4% or greater than 0.8% when measured at the reinforcement elements extracted from a cured tire, and, preferably, wherein the extensible reinforcement elements are wires comprising steel or hybrid cords.

5. The tire of at least one of the previous claims wherein the axial width of each of the narrow belts (62) is in the range of from 2.54 cm to 7.62 cm and/or is in the range of from one to two times the maximum axial width of the groove (36) located radially outward of the narrow belt.

6. The tire of at least one of the previous claims wherein the first and second narrow belt (62) are each positioned radially inward of said axially outermost groove (36) on each side of the tread (12) and extend axially under said respective groove (36), preferably over the full maximum axial width of said respective groove (36).

7. The tire of at least one of the previous claims wherein the axial width of each of the first and second narrow belt (62) is less than 1/3 of the tread arc width.

8. The tire of at least one of the previous claims wherein the radially inner working belt (54) has an axial width equal to the tread arc width or in a range of from 95% to 105% of the tread arc width.

9. The tire of at least one of the previous claims wherein the radially outer working belt (56) has an axial width less than the radially inner working belt (54) and/or wherein the radially inner working belt (54) is the axially widest belt of the belt structure (50)

10. The tire of at least one of the previous claims wherein the relatively low angle belt (58) has an axial width in the range of from 70 to 80 percent of the tread arc width.

11. The tire of claim 1 further including a transition belt located radially inwards of the working belts (54, 56), the transition belt preferably comprising parallel reinforcement elements making an angle in a range of from 45 to 70 degrees or in a range of from 45 to 70 degrees with respect to the circumferential direction.

12. The tire of claim 11 wherein the transition belt has an axial width in a range of from 60 to 80 percent of the tread arc width.

13. The tire of at least one of the previous claims wherein the aspect ratio of the tire (12) is less than or equal to 0.6.

14. The tire of at least one of the previous claims wherein the axial width of the rubber spacer (60) is in a range of from 45 to 60 percent of the tread arc width.

## Patentansprüche

1. Luftreifen für seine Verwendung auf Lastkraftwagen, wobei der Reifen (10) eine Lauffläche (12) und eine Gürtelstruktur (50) aufweist, die radial innerhalb der Lauffläche (12) angebracht ist, wobei die Gürtelstruktur (50) ein Paar von Arbeitsgürteln (54, 56) umfasst; wobei die Arbeitsgürtel (54, 56) verstärkte Lagen sind, die jeweils parallele Verstärkungselemente aufweisen; wobei der Winkel, der von den Verstärkungselementen in dem jeweiligen Arbeitsgürtel (54, 56) gebildet wird, in einem Bereich von 12 Grad bis 35 Grad in Bezug auf die Umfangsrichtung liegt; wobei die Gürtelstruktur (50) ferner einen einen relativ kleinen Winkel bildenden Gürtel (58) umfasst, der zwischen den Arbeitsgürteln (54, 56) angebracht ist und parallele Verstärkungselemente umfasst, die einen Winkel von weniger als 5 Grad in Bezug auf die Umfangsrichtung bilden; wobei der Gürtel (58), der einen relativ kleinen Winkel bildet, einen ersten und einen zweiten schmalen Gürtel (62) aufweist, die an jedem Seitenende (59) des Gürtels (58), der einen relativ kleinen Winkel bildet, angebracht sind; und wobei der erste und der zweite schmale Gürtel (62) jeweils in der radialen Richtung innerhalb einer in der axialen Richtung äußersten Nut (36) auf jeder Seite der Lauffläche (12) angebracht sind; **dadurch gekennzeichnet, dass** der Reifen ferner ein Abstandselement (60) aus Kautschuk umfasst, das in der axialen Richtung zwischen dem ersten und dem zweiten schmalen Gürtel (62) angebracht ist, wobei die axiale Breite des Abstandshalterelements (60) aus Kautschuk in einem Bereich liegt, der 35 bis 70 Prozent der Bogenbreite der Lauffläche ausmacht.

2. Reifen Anspruch 1, wobei der erste und der zweite schmale Gürtel (62) parallele Verstärkungselemente haben, die einen Winkel von weniger als 10 Grad mit der Umfangsrichtung bilden.

3. Reifen nach mindestens einem der vorhergehenden Ansprüche, der ferner ein Abstandshalterelement (60) aus Kautschuk aufweist, das zumindest teilweise in der radialen Richtung zwischen dem Gürtel (58), der einen relativ kleinen Winkel bildet, und dem ersten Arbeitsgürtel (56) angebracht ist.

4. Reifen nach mindestens einem der vorhergehenden Ansprüche, wobei die Verstärkungselemente in mindestens einem der Arbeitsgürtel (54, 56), in dem Gürtel (58), der einen relativ kleinen Winkel bildet, oder in dem ersten und/oder zweiten schmalen Gürtel (62) dehnbar sind, wobei sie eine Dehnung bei 10 % Bruchlast von mehr als 0,2 % oder mehr als 0,4 % oder mehr als 0,8 % aufweisen, wenn sie an Verstärkungselementen gemessen werden, die aus einem Reifen herausgezogen wurden, der vulkanisiert wurde; und vorzugsweise wobei die dehnbaren Verstärkungselemente Metalldrähte sind, die Stahlkorde oder Hybridkorde umfassen.

5. Reifen nach mindestens einem der vorhergehenden Ansprüche, wobei die axiale Breite jedes der schmalen Gürtel (62) in dem Bereich von 2,54 cm bis 7,62 cm liegt und/oder in dem Bereich von ein bis zwei Mal der maximalen axialen Breite der Nut (36) liegt, die in der radialen Richtung außerhalb des schmalen Gürtels liegt.

6. Reifen nach mindestens einem der vorhergehenden Ansprüche, wobei der erste und der zweite schmale Gürtel (62) jeweils in der radialen Richtung innerhalb der in der axialen Richtung äußersten Nut (36) auf jeder Seite der Lauffläche (12) angebracht sind und sich in der axialen Richtung unterhalb der jeweiligen Nut (36), vorzugsweise über die gesamte maximale axiale Breite der jeweiligen Nut (36) erstrecken.

7. Reifen nach mindestens einem der vorhergehenden Ansprüche, wobei die axiale Breite jedes der ersten und zweiten schmalen Gürtel (62) weniger als ein Drittel der Bogenbreite der Lauffläche beträgt.

8. Reifen nach mindestens einem der vorhergehenden Ansprüche, wobei der in der radialen Richtung innere Arbeitsgürtel (54) eine axiale Breite aufweist, die gleich der Bogenbreite der Lauffläche ist oder in dem Bereich liegt, der 95 % bis 105 % der Bogenbreite der Lauffläche ausmacht.

9. Reifen nach mindestens einem der vorhergehenden Ansprüche, wobei der in der radialen Richtung äußere Arbeitsgürtel (56) eine axiale Breite aufweist, die kleiner ist als der in der radialen Richtung innere Arbeitsgürtel (54), und/oder wobei der in der radialen Richtung innere Arbeitsgürtel (54) den in der axialen Richtung breitesten Gürtel der Gürtelstruktur (50) darstellt.

10. Reifen nach mindestens einem der vorhergehenden Ansprüche, wobei der Gürtel (58), der einen relativ kleinen Winkel bildet, eine axiale Breite hat, die in dem Bereich liegt, der 70 bis 80 Prozent der Bogenbreite der Lauffläche ausmacht.

11. Reifen nach Anspruch 1, der ferner einen Übergangsgürtel umfasst, der sich in der radialen Richtung innerhalb der Arbeitsgürtel (54, 56) befindet, wobei der Übergangsgürtel vorzugsweise parallele Verstärkungselemente umfasst, die einen Winkel in dem Bereich von 45 bis 70 Grad oder in dem Bereich von 45 bis 70 Grad in Bezug auf die Umfangsrichtung bilden.

12. Reifen nach Anspruch 11, wobei der Übergangsgürtel eine axiale Breite hat, die in dem Bereich liegt, der 60 bis 80 Prozent der Bogenbreite der Lauffläche ausmacht.

13. Reifen nach mindestens einem der vorhergehenden Ansprüche, wobei das Nennquerschnittsverhältnis des Reifens (12) kleiner oder gleich 0,6 ist.

14. Reifen nach mindestens einem der vorhergehenden Ansprüche, wobei die axiale Breite des Abstandshalters (60) aus Kautschuk in einem Bereich liegt, der 45 bis 60 Prozent der Bogenbreite der Lauffläche ausmacht.

## Revendications

1. Bandage pneumatique pour son utilisation sur des camions, le bandage (10) comprenant une bande de roulement (12) et une structure de ceintures (50) qui est disposée, dans la direction radiale, à l'intérieur de la bande de roulement (12), la structure de ceintures (50) englobant une paire de ceintures de travail (54, 56) ; dans lequel les ceintures de travail (54, 56) représentent des nappes renforcées qui comprennent chacune des éléments de renforcement parallèles ; dans lequel l'angle formé par les éléments de renforcement dans la ceinture de travail respective (54, 56) se situe dans une plage allant de 12 degrés à 35 degrés par rapport à la direction circonférentielle ; dans lequel la structure de ceintures (50) englobe en outre une ceinture (58) qui forme un angle relativement petit, disposée entre les ceintures de travail (54, 56) et comprenant des éléments de renforcement parallèles qui forment un angle qui est inférieur à 5 degrés par rapport à la direction circonférentielle ; dans lequel la ceinture (58) qui forme un angle relativement petit possède une première et une deuxième ceinture étroite (62) qui sont disposées à chaque extrémité latérale (59) de la ceinture (58) qui forme un angle relativement petit ; et dans lequel la première et la deuxième ceinture étroite (62) sont chacune disposées, dans la direction radiale, à l'intérieur d'une rainure (36) la plus externe, dans la direction axiale, de chaque côté de la bande de roulement (12) ; **caractérisé en ce que** le bandage comprend en outre un élément d'espacement (60) en caoutchouc qui est disposé, dans la direction axiale, entre la première et la deuxième ceinture étroite (62), la largeur axiale de l'élément d'espacement en caoutchouc (60) se situant dans une plage qui représente de 35 à 70 pour cent de la largeur d'arc de la bande de roulement.

2. Bandage revendication 1, dans lequel la première et la deuxième ceinture étroite (62) possèdent des éléments de renforcement parallèles qui forment un angle inférieur à 10 degrés par rapport à la direction circonférentielle.

3. Bandage selon au moins une des revendications précédentes, qui comprend en outre un élément d'espacement (60) en caoutchouc qui est situé, au moins en partie, dans la direction radiale, entre la ceinture (58) qui forme un angle relativement petit et la première ceinture de travail (56).

4. Bandage selon au moins une des revendications précédentes, dans lequel les éléments de renforcement dans au moins une des ceintures de travail (54, 56), dans la ceinture (58) qui forme un angle relativement petit ou dans la première et/ou la deuxième ceinture étroite (62) sont extensibles en possédant un allongement à 10 % de la charge de rupture supérieur à 0,2 % ou supérieur à 0,4 % ou supérieur à 0,8 % lorsqu'on le mesure sur les éléments de renforcement qui ont été extraits d'un bandage qui a été vulcanisé ; et, de préférence, dans lequel les éléments de renforcement extensibles sont des fils métalliques qui comprennent des câblés en acier ou des câblés hybrides.

5. Bandage selon au moins une des revendications précédentes, dans lequel la largeur axiale de chacune des ceintures étroites (62) se situe dans la plage allant de 2,54 cm à 7,62 cm et/ou se situe dans la plage qui correspond à une à deux fois la largeur axiale maximale de la rainure (36) qui est située, dans la direction radiale, à l'extérieur de la ceinture étroite.

6. Bandage selon au moins une des revendications précédentes, dans lequel la première et la deuxième ceinture étroite (62) sont chacune disposées, dans la direction radiale, à l'intérieur de ladite rainure (36) la plus externe dans la direction axiale, de chaque côté de la bande de roulement (12) et s'étendent dans la direction axiale en dessous de ladite rainure respective (36), de préférence sur la totalité de la largeur axiale maximale de ladite rainure respective (36).

7. Bandage selon au moins une des revendications précédentes, dans lequel la largeur axiale de chacune desdites première et deuxième ceintures étroites (62) est inférieure à un tiers de la largeur d'arc de la bande de roulement.

8. Bandage selon au moins une des revendications précédentes, dans lequel la ceinture de travail (54) interne, dans la direction radiale, possède une largeur axiale qui est égale à la largeur d'arc de la bande de roulement ou se situe dans une plage qui représente de 95 % à 105 % de la largeur d'arc de la bande de roulement.

9. Bandage selon au moins une des revendications précédentes, dans lequel la ceinture de travail (56) externe, dans la direction radiale, possède une largeur axiale qui est inférieure à la ceinture de travail (54) interne, dans la direction radiale, et/ou dans lequel la ceinture de travail (54) interne, dans la direction radiale, représente la ceinture de la structure de ceintures (50), la plus large, dans la direction axiale.

10. Bandage selon au moins une des revendications précédentes, dans lequel la ceinture (58) qui forme un angle relativement petit possède une largeur axiale qui se situe dans la plage qui représente de 70 à 80 pour cent de la largeur d'arc de la bande de roulement.

11. Bandage selon la revendication 1, qui englobe en outre une ceinture de transition qui est située, dans la direction radiale, à l'intérieur des ceintures de travail (54, 56), la ceinture de transition comprenant de préférence des éléments de renforcement parallèles qui forment un angle dans une plage allant de 45 à 70 degrés ou dans une plage allant de 45 à 70 degrés par rapport à la direction circonférentielle.

12. Bandage selon la revendication 11, dans lequel la ceinture de transition possède une largeur axiale qui se situe dans une plage qui représente de 60 à 80 pour cent de la largeur d'arc de la bande de roulement.

13. Bandage selon au moins une des revendications précédentes, dans lequel le rapport nominal d'aspect du bandage (12) est inférieur ou égal à 0,6.

14. Bandage selon au moins une des revendications précédentes, dans lequel la largeur axiale de l'élément d'espacement (60) en caoutchouc se situe dans une plage qui représente de 45 à 60 pour cent de la largeur d'arc de la bande de roulement.
